# EUROPEAN PATENT SPECIFICATION

(11) **EP 2 881 271 B1**
(45) Date of publication and mention of the grant of the patent: **12.10.2016**
(21) Application number: 14196932.9
(22) Date of filing: 09.12.2014
(51) Int. Cl.: B60H 1/00

(54) **Vehicle air-conditioning apparatus**
Fahrzeugklimaanlage
Appareil de climatisation de véhicule

(30) Priority: 09.12.2013 JP 2013253914
(43) Date of publication of application: 10.06.2015
(73) Proprietor: Valeo Japan Co., Ltd., Saitama 360-0193 (JP)
(72) Inventor: Koike, Takao, Saitama 360-0193 (JP); Hayashi, Naoto, Saitama 360-0193 (JP); Nakajima, Nowaki, Saitama 360-0193 (JP)
(74) Representative: Pellegrini, Marie Claude

(56) References cited:
- EP-A2- 2 610 091
- JP-A- 2001 270 320
- JP-A- 2011 148 380

## Description

### BACKGROUND OF THE INVENTION

### Field of the Invention

The present invention relates to vehicle air-conditioning apparatus configured, for example, to open and close an air channel, and a vehicle air conditioning apparatus provided with the air channel opening-closing apparatus and, specifically, to a vehicle air conditioning apparatus provided with a sliding-type door mechanism.

### Description of Related Art

In general, in a vehicle air-conditioning apparatus, an air flow of air outside the vehicle or air inside the vehicle is supplied as an air flow having a flow velocity required by a blower fan. An interior of the air conditioning apparatus is provided with a flow channels for various air flows, and a cooling heat exchanger and heating heat exchanger are arranged therein. The supplied air flow is adjusted in wind velocity and air amount by being cooled, heated, or mixed in the interior of the apparatus, and is supplied from a blowing port for ventilation or a blowing port for defrosting, or a blowing port for feet into a vehicle cabin. The air flow to be supplied to the vehicle cabin is required to have adequate temperature, air amount, and wind velocity as a matter of course, and also to be comfortable up to the left side and right side of the blowing ports for ventilation or for feet, which are supply ports. Also, minimization of noise is also required.

Therefore, in the vehicle air-conditioning apparatus, flow channels for various air flows are formed, and the air flow is regenerated as an air flow having required temperatures, air amount, and flow velocity while passing through the respective flow channels, and is guided to a blowing port into the vehicle cabin. In order to generate a required adequate mixed air flow, a plurality of air flow channels are formed in the air conditioning apparatus and an opening-closing valve function for adjusting opening and closing of an opening is provided at a dividing port or a guiding branch of each of the air flow channel. Examples of the opening-closing valve function include a rotating valve and a sliding-type door mechanism, which are selected and used at suitable positions depending on applications.

The sliding-type door mechanism is provided with a door sliding with respect to the air flow channel in the direction intersecting with a direction of air passage, occupies a small capacity in the interior of the vehicle air-conditioning apparatus, and thus contributes to achieve a compact profile of the air conditioning apparatus itself.

The air passage channel switching apparatus disclosed in Patent Literature 1 and Patent Literature 2 are basically composed of a curved-shaped, or flat-shaped door and a rotational drive unit. The rotational drive unit is axially supported by a case, which is an outer frame in the vicinity of a bifurcating point of the air flow channel and includes a disc-shaped drive gear on a rotating shaft at a predetermined distance. The door is formed with a driven gear substantially on a power line extending along a sliding direction at a portion corresponding to the drive gear. The drive gear and the driven gear are engaged each other, and the rotation of the rotating shaft is transmitted to the drive gear. Accordingly, the door has a mechanism of making a sliding movement in a radial direction with respect to the rotating shaft.

Air in the interior of the air conditioning apparatus is allowed to flow through a route passing through the cooling heat exchanger, then a heating heat exchanger to a mixing chamber, and a route passing through the cooling heat exchanger, then bypassing the heating heat exchanger to the mixing chamber. By arranging a sliding-type door between the cooling heat exchanger and the heating heat exchanger, and moving the door as needed, an amount of air flowing through the heating heat exchanger and an amount of bypassing air may be adjusted.

By eliminating the amount of air flowing through the heating heat exchanger, and cooling the air by the cooling heat exchanger, only cold air may be supplied to the vehicle cabin. This is an air flowing route for a fully-cooling mode (cooling only). By eliminating the amount of air bypassing the heating heat exchanger, only warm air can be supplied to the vehicle cabin. This is an air flowing route for a fully-hot mode (warming only). Furthermore, by determining the amount of air flowing through the heating heat exchanger and the amount of air bypassing the heating heat exchanger to be arbitrary ratio, the air conditioned in temperature may be supplied to the vehicle cabin. This is an air flowing route in a mixing mode.

In any of air-conditioning structures in the fully-cooling mode, the fully-hot mode, or the mixing mode, it is needless to say that supplying a comfortable air flow having required temperature, wind velocity, and air amount to the vehicle cabin in a calm state without generation of noise is important for the air conditioning apparatus. In order to do so, employing a structure which eliminates an air ventilation resistance which impairs a smooth air flow and the air pressure thereof in any of the air flowing routes in the vehicle air-conditioning apparatus is a technical object, and substances or structures which impair air flow and generate an air ventilation resistance may cause generation of noise. Therefore, study and development for solving the problem are continued.

In the case where a rod-shaped article such as a rotating shaft or the like is arranged in the midcourse of the air flow, an eddy air flow is generated in the vicinity of the downstream side of the rotating shaft, which may cause increases in air ventilation resistance and noise. In addition, in the fully-cooling mode, or the fully-hot mode, an air flow concentrate in a space in the periphery of the rotating shaft. Therefore, the wind velocity and the air pressure increase, and hence the air ventilation resistance and the noise tend to increase.

From this point of view, Patent Literature 1 discloses a technical thought to prevent increases in air ventilation resistance and noise by focusing an attention on the shape of the rotational drive unit. The rotating shaft of the rotational drive unit is formed to have a flat cross section, and is set so that the longitudinal direction of the flat shape extends along the air flow in the fully-cooling mode and the fully-hot mode. Accordingly, the rotating shaft is capable of preventing increases in air ventilation resistance and noise without impairing the air flow.

### Patent Literature

Patent Literature 1 : JP-A-2011-148380
Patent Literature 2 : JP-A-2004-210034

### Problem to be solved

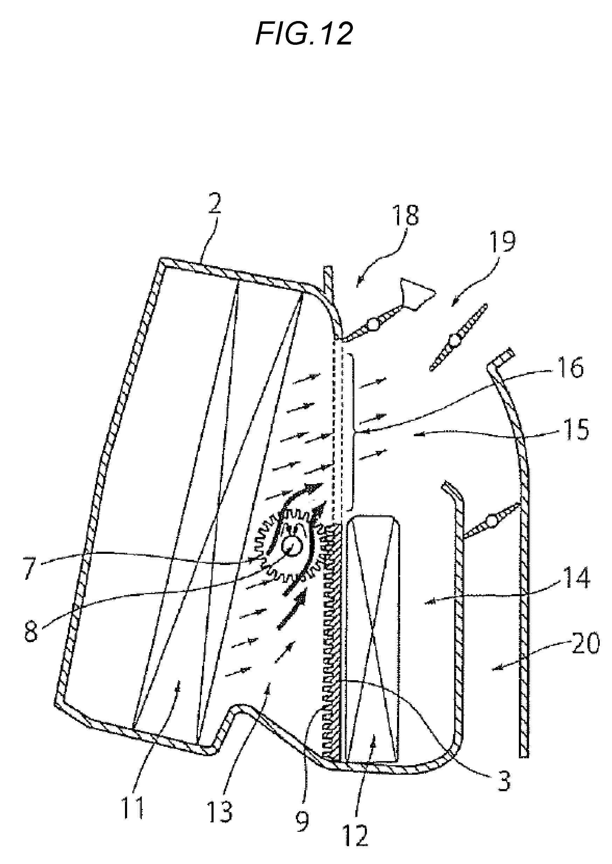

Fig. 12 illustrates the related art and is a schematic cross-sectional view of an arrangement of sliding-type door and a coupling shaft in the fully-cooling mode of the vehicle air-conditioning apparatus in the related art provided with a sliding-type door mechanism. The heating heat exchanger is arranged on the downstream side of the cooling heat exchanger, and the sliding-type door mechanism is arranged between these two heat exchangers. The sliding-type door mechanism includes a sliding-type door and a drive unit for driving the sliding-type door. The drive unit includes a plurality of substantially circular-shaped rotational drive units and a coupling shaft configured to couple the rotational drive units, and outer peripheries of the rotational drive units are configured as drive gears. The sliding-type door includes a driven gear, which is meshed with the drive gears. The drive unit is arranged on the upstream side of the sliding-type door, and interference with the heating heat exchanger is prevented.

In Fig. 12, the sliding-type door is positioned at a lower end of a movable range. Accordingly, an opening (first flow-through opening) located above the sliding-type door is opened, and an opening (second flow-through opening) where the sliding-type door is positioned is closed. Air flowing out from the cooling heat exchanger passes through the first flow-through opening as a whole, and flows to respective blowing ports provided on the downstream side.

Part of air flowing out from the cooling heat exchanger, specifically, from the lower side, flows toward the sliding-type door and, simultaneously, changes the direction of flow upward in pursuit of an outflow port, and flows toward the first flow-through opening. In a space immediately after having flowed out from the cooling heat exchanger, the pressure of the air flow is low, and the wind velocity is low. However, in a space in which the direction of flow changes, the pressure is high and the wind velocity is also high (thick arrows in Fig. 12).

In this manner, the space in which the coupling shafts are arranged is a space in which the pressure is high and the wind velocity is also high in the fully-cooling mode. In the peripheries of the coupling shafts and in the vicinity of the downstream side, an eddy of air or the like is generated and causes an increase of an air ventilation resistance and increase of noise.

In Patent Literature 1, even though the air ventilation resistance can be reduced by devising the cross sections of the coupling shafts, since the coupling shafts are arranged in the space in which the pressure is high and the wind velocity is also high, an effect of retraining increases in air ventilation resistance and noise is limited.

Patent Literature 2 discloses a technology of reducing an air ventilation resistance by forming an interior of the coupling shaft into a truss hollow structure and securing a channel of the air flow. Certain synergetic effects that the strength of a shaft structure is secured for transmitting a rotational drive force and simultaneously the air ventilation resistance with respect to an air flow is reduced are recognized in the truss hollow structure. However, the coupling shafts are still arranged in the space in which the pressure is high and the wind velocity is high, so that a fundamental problem resolution is not achieved.

### SUMMARY OF THE INVENTION

It is an object of the invention to provide a vehicle air-conditioning apparatus provided with a sliding-type door mechanism configured to prevent increases in air ventilation resistance and noise in a fully-cooling mode or a fully-hot mode further reliably.

In order to solve the above-described problem, there is provided a vehicle air-conditioning apparatus provided with a sliding-type door mechanism according to the invention including: a case formed with a plurality of air channels in an interior thereof; a plate-shaped sliding-type door arranged so as to be slidable across the plurality of air channels in the case and configured to adjust the plurality of air channels to be opened and closed; a driven gear provided on the sliding-type door along a direction of movement of the sliding-type door and configured to move the sliding-type door in the direction of movement; a plurality of rotational drive units arranged across the direction of movement on an upstream side of the sliding-type door, at least one of the rotational drive units including a rotational drive gear configured to drive the sliding-type door by engaging the driven gear; and a coupling shaft configured to couple the plurality of rotational drive units at positions deviated from centers of rotation (Claim 1).

Since the coupling shaft is at a position deviated from the centers of rotation of the rotational drive units, the position of the coupling shaft can be changed freely, and the coupling shaft may be moved away from a space in which a wind velocity and an air pressure are increased in a fully-cooling mode, a fully-hot mode, or a mixing mode thereof.

Preferably, the coupling shaft is set to be at a position most proximity to the sliding-type door when the sliding-type door is at a position substantially closing any one of the plurality of air channels (Claim 2).

Since the coupling shaft is not arranged in the midcourse of the air flow in the fully-cooling mode and the fully-hot mode, increases in air ventilation resistance and noise may be restrained.

Preferably, the sliding-type door includes a dig-in groove on a surface of the coupling shaft side along the length of the coupling shaft, and the coupling shaft is set at a position entering the dig-in groove of the sliding-type door when the sliding-type door is at a position of substantially closing any one of the plurality of air channels (Claim 3).

Since the coupling shaft is not arranged in the midcourse of the air flow in the fully-cooling mode and the fully-hot mode, increases in air ventilation resistance and noise may be restrained.

Preferably, the coupling shaft is set to be at a position farthest from the sliding-type door when the sliding-type door is at a position substantially closing any one of the plurality of air channels (Claim 4).

The coupling shaft can be moved away from a position where the wind velocity and the air pressure are increased in the fully-cooling mode and the fully-hot mode, so that increases in air ventilation resistance and noise may be restrained.

Preferably, the coupling shaft is set to be at a position of the rotational drive unit where the wind velocity is lowest when the sliding type door is at the position substantially closing any one of the plurality of air channels (Claim 5).

The coupling shaft can be arranged at a position where the wind velocity is low in the fully-cooling mode and the fully-hot mode, so that increases in air ventilation resistance and noise may be restrained.

Preferably, two of the coupling shafts are provided, one of the coupling shafts is set so as to take a position most proximity to the sliding-type door, and the other coupling shaft is arranged at a position farthest from the sliding-type door / or a position at which the wind velocity is lowest when the sliding-type door is at the position substantially closing one of the plurality of air channels (Claim 6).

Rigidity of the rotational drive units, specifically, rigidity in the direction of rotation may be increased while arranging the coupling shaft at a position in which increases in air ventilation resistance and noise are restrained in the fully-cooling mode and the fully-hot mode.

Preferably, the coupling shaft has a flat cross-sectional shape, and the coupling shaft is arranged so that the longitudinal direction of the flat shape extends along the direction of an air flow in the periphery of the coupling shaft when the sliding-type door is at the position substantially closing one of the plurality of air channels (Claim 7).

In the fully-cooling mode and the fully-hot mode, not only the coupling shaft is arranged at a position in which increases in air ventilation resistance and noise are restrained, the increases in air ventilation resistance and noise may be restrained further reliably.

In addition, a heating heat exchanger to be arranged downstream of the sliding-type door is provided, and the plurality of air channels are applied to the vehicle air-conditioning apparatus in which the plurality of air channels are a warm channel that passes through the heat exchanger (12) and a bypass channel that bypasses the heat exchanger (12) (Claim 8), so that an effect of restraining increases in air ventilation resistance and noise is achieved.

### Effects of the Invention

According to the invention, in the structure of the sliding-type door to be installed at an air flow guiding branch in the vehicle air-conditioning apparatus, the vehicle air-conditioning apparatus including the sliding-type door mechanism configured to reliably prevent increases in air ventilation resistance and noise in the fully-cooling mode and the fully-hot mode is provided.

### BRIEF DESCRIPTION OF THE DRAWINGS

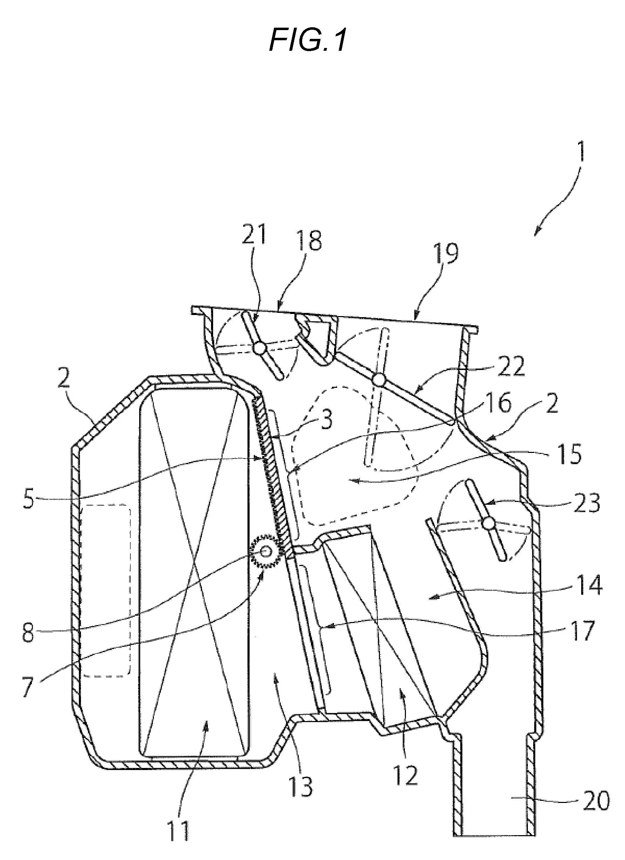

Fig. 1 is a drawing for explaining a general configuration of a vehicle air-conditioning apparatus provided with a sliding-type door mechanism according to a first embodiment of the invention, and is a schematic drawing illustrating a cross section of a substantially center portion in a lateral direction of the vehicle air-conditioning apparatus;

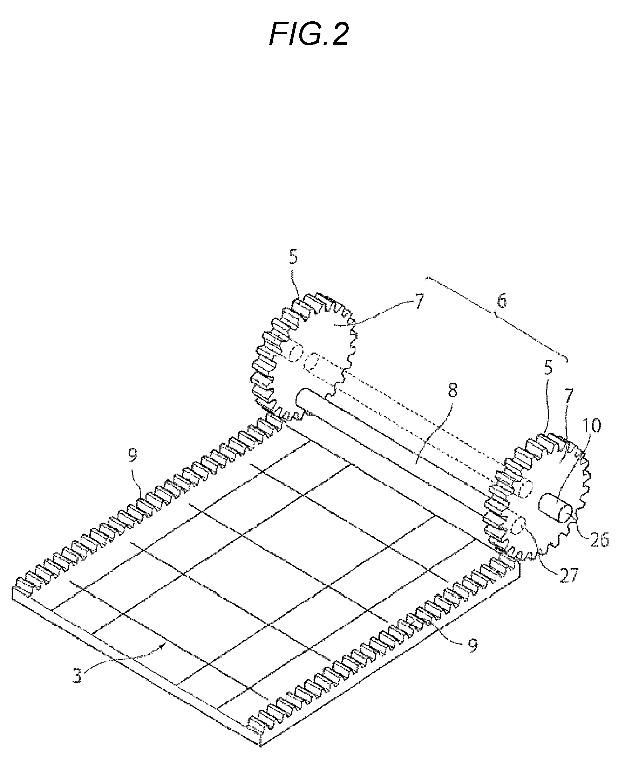

Fig. 2 is a perspective view of the sliding-type door mechanism according to the first embodiment of the invention viewed from upstream of an air flow;

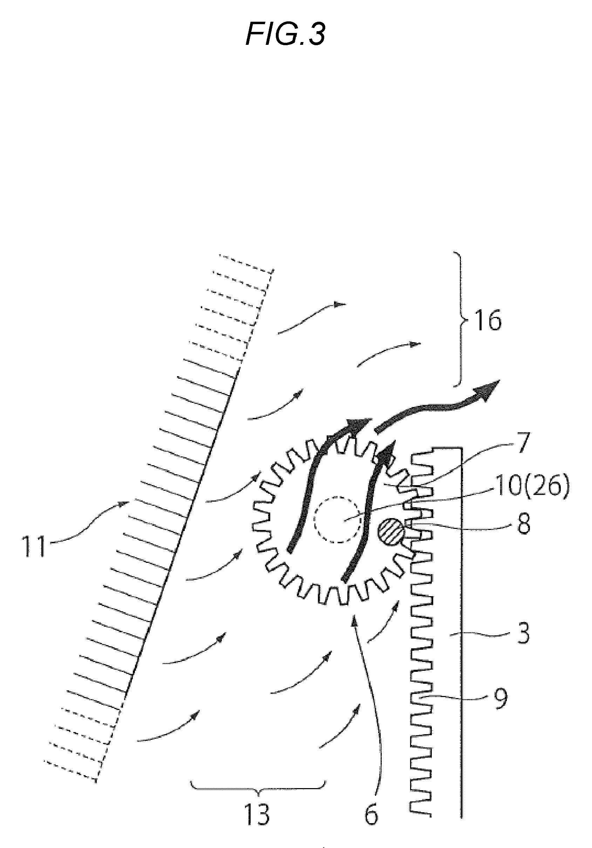

Fig. 3 is a schematic cross-sectional view of a vehicle air-conditioning apparatus provided with a sliding-type door mechanism according to a second embodiment of the invention, and a schematic cross-sectional view illustrating an arrangement of a sliding-type door and a coupling shaft and an air flow in a fully-cooling mode;

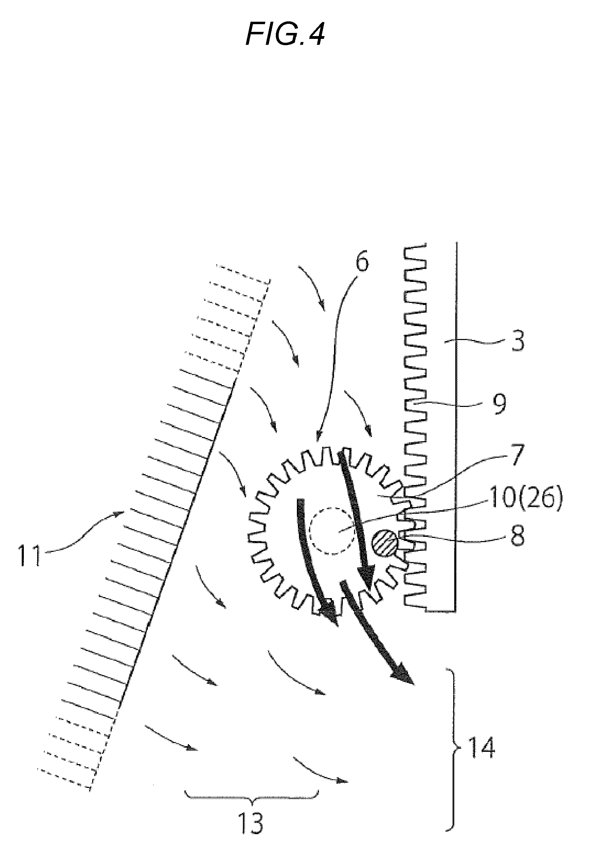

Fig. 4 is a schematic cross-sectional view of the vehicle air-conditioning apparatus provided with the sliding-type door mechanism according to the second embodiment of the invention, and a schematic cross-sectional view illustrating an arrangement of the sliding-type door and the coupling shaft and an air flow in a fully-hot mode;

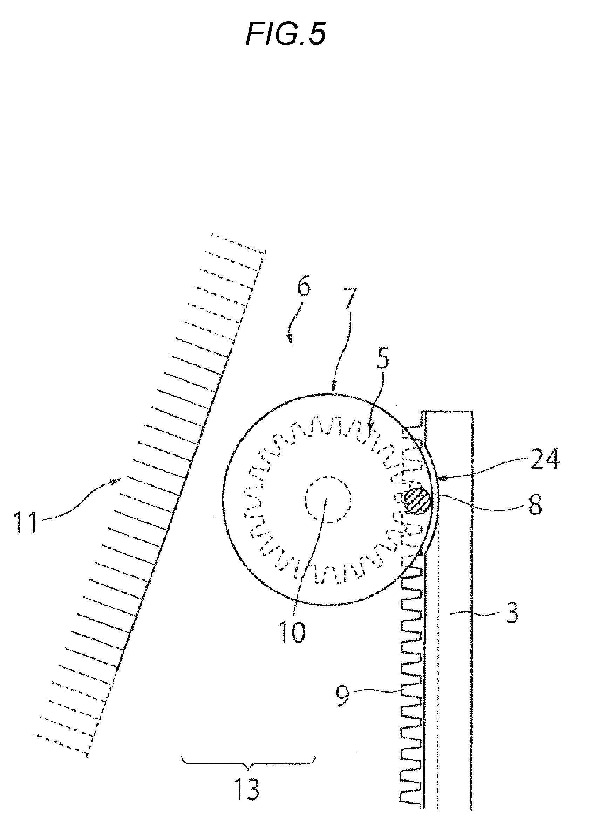

Fig. 5 is a schematic cross-sectional view of a vehicle air-conditioning apparatus provided with a sliding-type door mechanism according to a first example of a third embodiment of the invention, and a schematic cross-sectional view illustrating an arrangement of a sliding-type door and a coupling shaft in the fully-cooling mode;

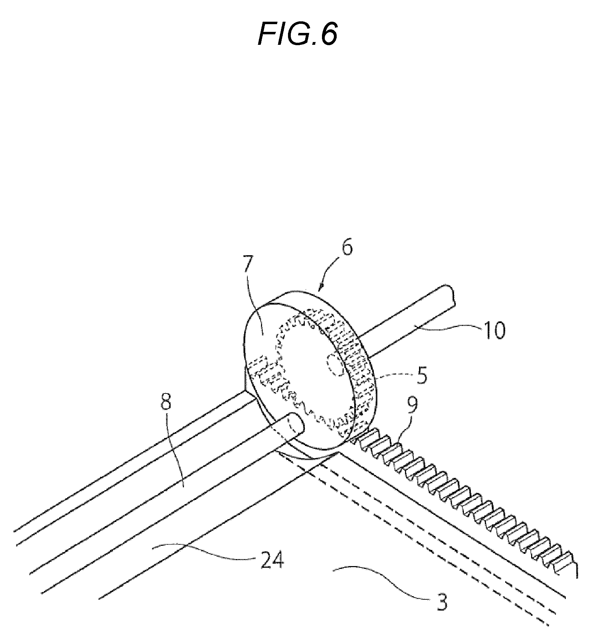

Fig. 6 is an explanatory drawing of a sliding-type door mechanism according to a second example of the third embodiment of the invention, and is a perspective view of the sliding-type door mechanism for explaining a case where a coupling shaft enters a dig-in groove of the sliding-type door;

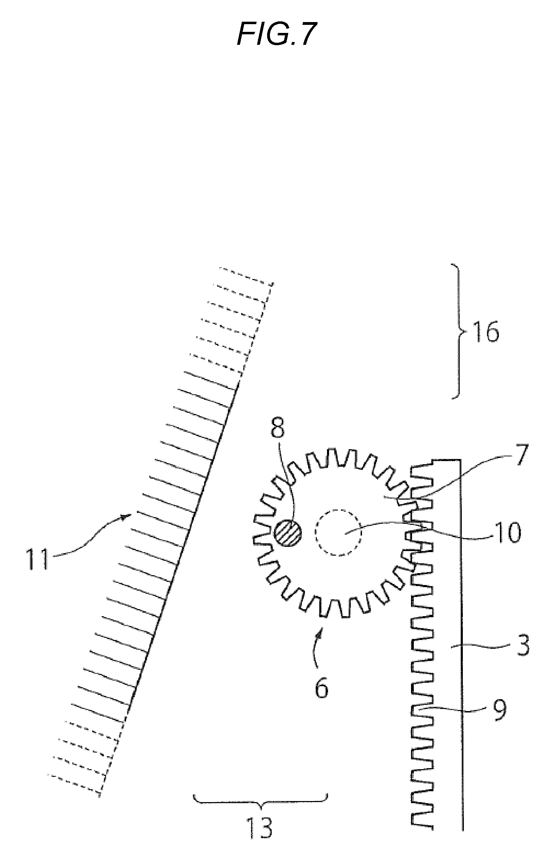

Fig. 7 is a schematic cross-sectional view of a vehicle air-conditioning apparatus provided with a sliding-type door mechanism according to a fourth embodiment of the invention, and a schematic cross-sectional view illustrating an arrangement of a sliding-type door and a coupling shaft in the fully-cooling mode;

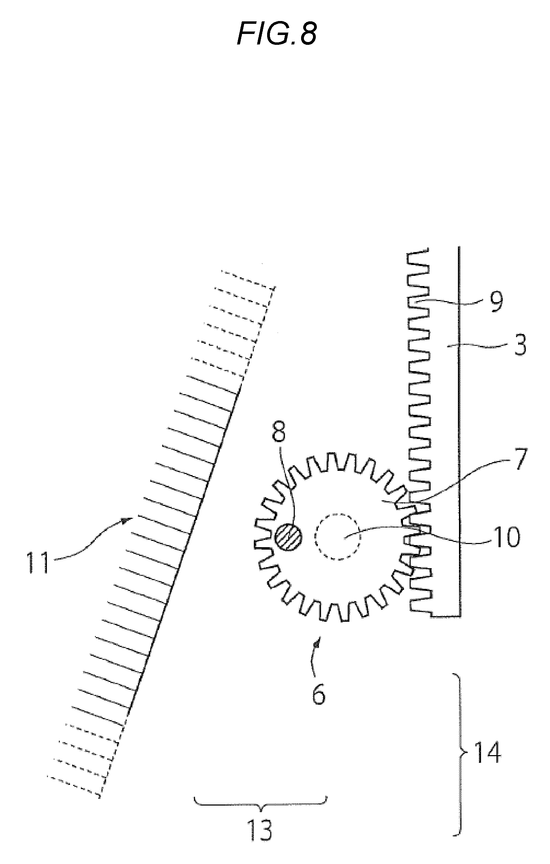

Fig. 8 is a schematic cross-sectional view of the vehicle air-conditioning apparatus provided with the sliding-type door mechanism according to the fourth embodiment of the invention, and a schematic cross-sectional view illustrating an arrangement of the sliding-type door and the coupling shaft in the fully-hot mode;

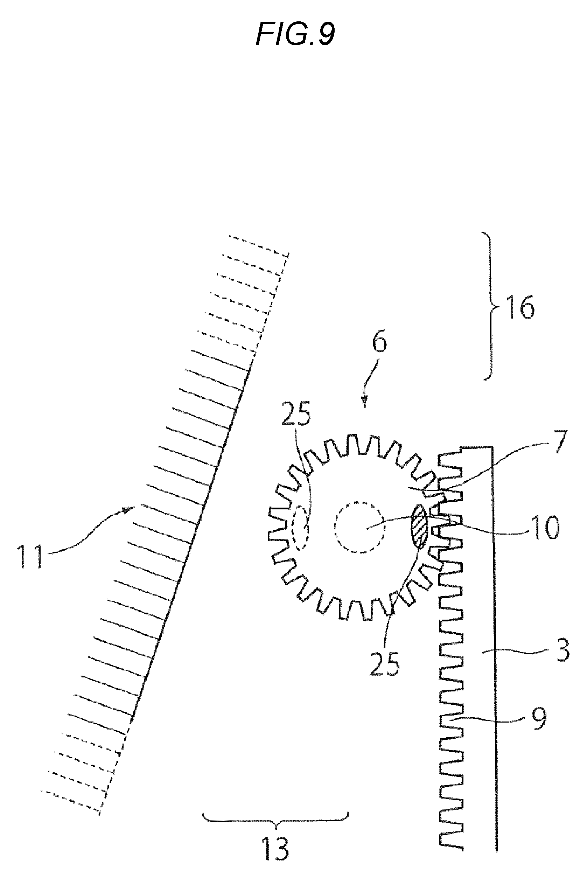

Fig. 9 is a schematic cross-sectional view of a vehicle air-conditioning apparatus provided with a sliding-type door mechanism according to a first example of a seventh embodiment of the invention, and a schematic cross-sectional view illustrating an arrangement of a sliding-type door and a coupling shaft in the fully-cooling mode;

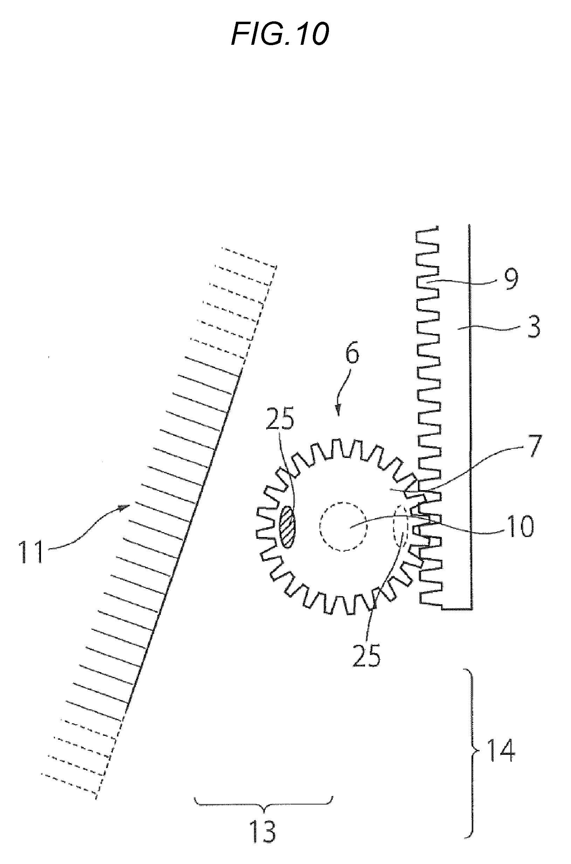

Fig. 10 is a schematic cross-sectional view of the vehicle air-conditioning apparatus provided with the sliding-type door mechanism according to the first example of the seventh embodiment of the invention, and a schematic cross-sectional view illustrating an arrangement of the sliding-type door and the coupling shaft in the fully-hot mode;

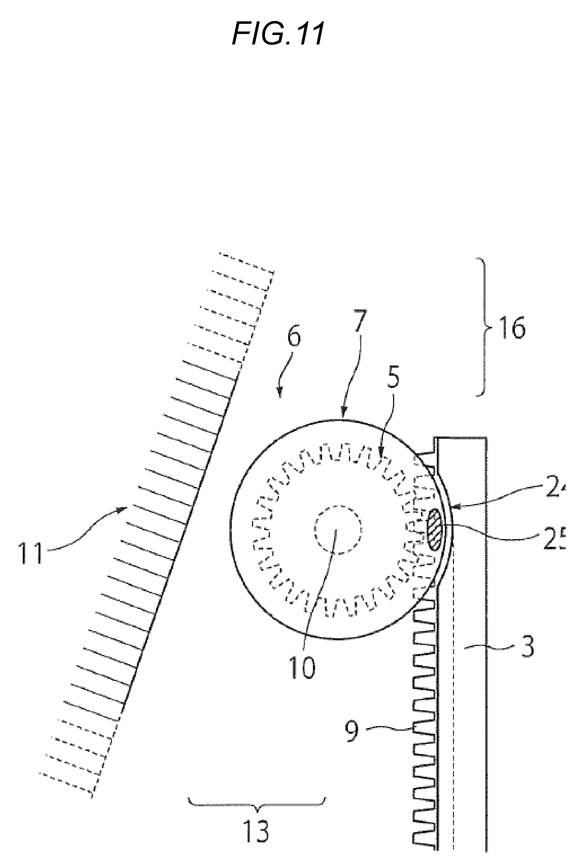

Fig. 11 is a schematic cross-sectional view of a vehicle air-conditioning apparatus provided with a sliding-type door mechanism according to a second example of the seventh embodiment of the invention, and a schematic cross-sectional view illustrating an arrangement of a sliding-type door and a coupling shaft in the fully-cooling mode; and
Fig. 12 is a drawing for explaining a general configuration of a vehicle air-conditioning apparatus provided with a sliding-type door mechanism of the related art, and is a schematic drawing illustrating a cross section of a substantially center portion in a lateral direction of the vehicle air-conditioning apparatus.

### DESCRIPTION OF EMBODIMENTS

A mode for implementing the present invention will be described with reference to the drawings. In the following description, a range required for achieving the object of the invention is schematically illustrated, and the range required for explaining the corresponding portion of the invention is mainly described. The related art may be quoted as regards configuration in which the description is omitted.

### First Embodiment

Fig. 1 is a drawing for explaining a general configuration of a vehicle air-conditioning apparatus provided with a sliding-type door mechanism according to a first embodiment of the invention, and is a schematic drawing illustrating a cross section of a substantially center portion in a lateral direction of the vehicle air-conditioning apparatus. As illustrated in Fig. 1, a vehicle air-conditioning apparatus 1 provided with the sliding-type door mechanism according to the invention includes a case 2 provided with a plurality of air channels in an interior thereof, and includes a cooling heat exchanger 11, a sliding-type door 3, a rotational drive units 7, a coupling shaft 8, a driven gear 9, a heating heat exchanger 12, a defrost door 21, a ventilation door 22, and a foot door 23 arranged at predetermined positions in the case 2.

The case 2 includes an air intake port (dotted portion on the left side in Fig. 1) configured to take air fed from a blower fan (not illustrated), and a blowing port for defrost 18, a blowing port for ventilation 19, and a foot blowing port 20 configured to blow out air conditioned in temperature. The air fed from the air intake port to the case 2 passes through the cooling heat exchanger 11, then passes through or bypasses the heating heat exchanger 12, reaches a mixing chamber 15, and then is blown out from blowing port for defrost 18, the the blowing port for ventilation 19, and a foot blowing port 20 in accordance with opening and closing the defrost door 21, the ventilation door 22, and the foot door 23.

The cooling heat exchanger 11 is configured as part of a known freezing cycle (not illustrated), and is capable of cooling air by exchanging heat between air blown by a blower fan and a heat medium. It is also possible to configure that the heat exchange is not performed unless the freezing cycle is activated.

The heating heat exchanger 12 is configured as part of a known heating cycle (not illustrated), and is capable of heating air by exchanging heat between air blown by the blower fan and a heat medium. The heating heat exchanger 12 is arranged on the downstream side of the cooling heat exchanger 11, and with this arrangement, a dehumidification heating operation is enabled by heating cold air dehumidified by the cooling heat exchanger 11.

The heating heat exchanger 12 is arranged so as to cover part of the cooling heat exchanger 11 on the downstream side as illustrated in Fig. 1. In this configuration, control of heating/not heating the air after having passed through the cooling heat exchanger 11 is enabled by changing the position of the sliding-type door 3 described later as needed. The heating heat exchanger 12 may be configured as an electric heat generating system instead of being configured as part of the heating cycle.

The sliding-type door 3 is arranged between the cooling heat exchanger 11 and the heating heat exchanger 12, and is arranged so as to be slidable between a position for closing a front surface of the heating heat exchanger 12 and a position for closing a channel bypassing the heating heat exchanger 12. The sliding-type door 3 is provided with the driven gear 9 along a direction of movement of the sliding-type door as described later.

Fig. 1 illustrates a state in which the sliding-type door 3 is slid to an upper end. The sliding-type door 3 opens a second flow-through opening 17 which allows air in a cold air channel 13 to flow toward the heating heat exchanger 12, and closes a first flow-through opening 16 which allows air in the cold air channel 13 to flow therethrough while bypassing the heating heat exchanger 12. A warm air channel 14 is provided on the downstream side of the heating heat exchanger 12, and becomes an air flow channel flowing out from the heating heat exchanger 12.

In contrast, when the sliding-type door 3 slides to a lower end (not illustrated), the sliding-type door 3 opens the first flow-through opening 16, and closes the second flow-through opening 17. The mixing chamber 15 is provided on the downstream of the first flow-through opening 16 and the warm air channel 14.

Subsequently, an operation of the vehicle air-conditioning apparatus will be described. A state in which the sliding-type door 3 is slid upward and closes the first flow-through opening 16 is referred to as "fully-hot mode". In the fully-hot mode, the air flow passing through the cold air channel 13 enters the mixing chamber 15 through the second flow-through opening 17, the heating heat exchanger 12, and the warm air channel 14.

A state in which the sliding-type door 3 is slid downward and closes the second flow-through opening 17 is referred to as "fully-cooling mode". In the fully-cooling mode, the air flow passing through the cold air channel 13 enters the mixing chamber 15 through the first flow-through opening 16.

When the sliding-type door 3 is slid to a substantially center portion in the vertical direction and does not close the second flow-through opening 17 and the first flow-through opening 16, the air flow passing through the cold air channel 13 is bifurcated and flows into two flow channels. In other words, the air flow flows through a flow channel entering the mixing chamber 15 via the second flow-through opening 17, the heating heat exchanger 12, and the warm air channel 14, and a flow channel entering the mixing chamber 15 via the first flow-through opening 16.

The two air flows are mixed in the mixing chamber 15, and flows to the blowing port for defrost 18, the blowing port for ventilation 19, or the foot blowing port 20. The blowing port for defrost 18 is provided with the defrost door 21, the blowing port for ventilation 19 is provided with the ventilation door 22, and the foot blowing port 20 is provided with the foot door 23. Opening or closing states of the respective doors are determined by an operation from the vehicle cabin or by a known air conditioning automatic control apparatus and the amount of the air flow is adjusted thereby.

Fig. 2 is a perspective view of the sliding-type door mechanism according to the first embodiment of the invention when viewed from the upstream of the air flow. As illustrated in the same drawing, the sliding-type door mechanism according to the embodiment includes the two rotational drive units 7, the coupling shaft 8, a drive unit 6 having two rotating shafts 10, and the sliding-type door 3. The two rotational drive units 7 are respectively joined to the coupling shaft 8, and on surfaces of the rotational drive units 7 opposite to surfaces to which the coupling shaft 8 is joined are provided with the rotating shafts 10 at a center thereof. The rotational drive units 7 each are provided with a drive gear 5 on an outer periphery thereof. The drive unit 6 is rotatable by the rotating shafts 10 being rotatably supported by the case 2 or the like. An axial direction of the coupling shaft 8 is set to be substantially parallel to an axial direction of the rotating shafts 10. The sliding-type door 3 is slidably supported by the case 2 or the like, and is provided with driven gears 9 on both sides thereof along a sliding direction. The drive gears 5 of the drive unit 6 and the driven gears 9 of the sliding-type door 3 engage each other, and are configured to slide the sliding-type door 3 to an arbitrary position by the rotating shafts 10 of the drive unit 6 rotated by an external motive power.

In Fig. 2, two of the circular-shaped rotational drive units 7 are illustrated. However, three or more of the rotational drive units 7 may be provided. The sliding-type door 3 are illustrated as having a flat plate shape. However, the sliding-type door 3 may be curved toward the coupling shaft 8 or away from the coupling shaft 8. The driven gears 9 may be formed integrally with the sliding-type door 3, or may be mounted after having formed as separate members.

The sliding-type door mechanism according to the embodiment is characterized by the position where the substantially circular rotational drive units 7 and the coupling shaft 8 join. As illustrated in Fig. 2, the coupling shaft 8 of the sliding-type door mechanism according to the embodiment is joined with the rotational drive units 7 at deviated positions (eccentric positions) 27 from centers of rotation 26 of the rotational drive units 7. In other words, the coupling shaft 8 is joined to the rotational drive units 7 on the outer peripheral side of the rotational drive units 7 with respect to positions where the centers of rotation 26 of the rotational drive units 7 are coupled illustrated by a dotted line in the same drawing. In this configuration, the coupling shaft 8 is capable of changing the distance from the sliding-type door 3 freely in accordance with the rotating action of the drive unit 6.

### Second Embodiment

A vehicle air-conditioning apparatus provided with a sliding-type door mechanism according to a second embodiment of the invention will be described. The coupling shaft 8 according to the embodiment is joined to the rotational drive units 7 at the eccentric positions 27 on the rotational drive units 7. In addition, the coupling shaft 8 is set at a position most proximity to the sliding-type door 3 in the fully-cooling mode and/or fully-hot mode.

Fig. 3 is a schematic cross-sectional view of the vehicle air-conditioning apparatus provided with the sliding-type door mechanism according to the second embodiment of the invention, and a schematic cross-sectional view illustrating an arrangement of a sliding-type door and a coupling shaft and an air flow in a fully-cooling mode. The sliding-type door 3 illustrated in the same drawing makes a sliding movement so as to open the first flow-through opening 16 and close the second flow-through opening 17, and is positioned relatively downward of the drive unit 6. The coupling shaft 8 is at a position most proximity to the sliding-type door 3.

The air flow passing through the cooling heat exchanger 11 is indicated by arrows (thin arrows and thick arrows) in Fig. 3. Part of air passing through the cooling heat exchanger 11, which is flowing out from above the sliding-type door 3, flows straight toward the first flow-through opening 16 and then flows to the mixing chamber 15. In contrast, air flowing out from the same height as the sliding-type door 3 flows toward the sliding-type door 3 and simultaneously, changes the direction of flow upward in pursuit of an outflow port, and flows toward the mixing chamber 15 via the first flow-through opening 16. In a space immediately after having flowed out from the cooling heat exchanger 11, the pressure of the air flow is low, and the wind velocity is low (thin arrows). However, in a space in which the direction of flow changes, the pressure is high and the wind velocity is also high (thick arrows).

The coupling shaft 8 of this embodiment is at a position deviated from the centers of the rotational drive units 7 and most proximity to the sliding-type door 3. In this manner, since the coupling shaft 8 is not located in the space in which the pressure or the wind velocity of the air is increased, an increase in air ventilation resistance or an increase in noise caused by the sliding-type door mechanism may be restrained effectively.

Fig. 4 is a schematic cross-sectional view of a vehicle air-conditioning apparatus provided with a sliding-type door mechanism according to an embodiment of the invention, and a schematic cross-sectional view illustrating an arrangement of the sliding-type door and a coupling shaft and an air flow in a fully-hot mode. The sliding-type door 3 illustrated in the same drawing makes a sliding movement so as to close the first flow-through opening 16 and open the second flow-through opening 17, and is positioned relatively upward of the drive unit 6. The coupling shaft 8 is at a position most proximity to the sliding-type door 3.

The air flow having passed through the cooling heat exchanger 11 is indicated by arrows (thin arrows and thick arrows) in Fig. 4. Part of air passing through the cooling heat exchanger 11, which is flowing out from below the sliding-type door 3, flows straight toward the second flow-through opening 17 and then flows to the mixing chamber 15 via the heating heat exchanger 12, and the warm air channel 14. In contrast, air flowing out from the same height as the sliding-type door 3 flows straight ahead toward the sliding-type door 3 and simultaneously, changes the direction of flow downward in pursuit of an outflow port, and flows toward the mixing chamber 15 via the second flow-through opening 17, the heating heat exchanger 12, and the warm air channel 14. In the space immediately after having flowed out from the cooling heat exchanger 11, the pressure of the air flow is low, and the wind velocity is low (thin arrows). However, in the space in which the direction of flow changes, the pressure is high and the wind velocity is also high (thick arrows).

The coupling shaft 8 of this embodiment is at the position deviated from the centers of the rotational drive units 7 and most proximity to the sliding-type door 3. In this manner, since the coupling shaft 8 is not located in the space in which the pressure or the wind velocity of the air is increased, an increase in air ventilation resistance or an increase in noise caused by the sliding-type door mechanism may be restrained effectively.

Setting the distance of the coupling shaft 8 with respect to the sliding-type door 3 in the fully-cooling mode or the fully-hot mode at an adequate position as in the first embodiment and/or the second embodiment is achieved by inspecting and setting gear pitches of the drive gear 5 and the driven gears 9 and the distance of movement of the sliding-type door 3 adequately.

### Third Embodiment

A vehicle air-conditioning apparatus provided with a sliding-type door mechanism according to a third embodiment of the invention will be described. The coupling shaft 8 according to the embodiment is joined to the rotational drive units 7 at the eccentric positions 27 on the rotational drive units 7. In addition, the coupling shaft 8 is set at a position most proximity to the sliding-type door 3 in the fully-cooling mode and/or fully-hot mode. In addition, the coupling shaft 8 is set so as to be accommodated in a dig-in groove 24 formed on an upstream side surface of the sliding-type door 3.

Fig. 5 is a schematic cross-sectional view of a vehicle air-conditioning apparatus provided with a sliding-type door mechanism according to a first example of the third embodiment of the invention, and a schematic cross-sectional view illustrating an arrangement of a sliding-type door and a coupling shaft and an air flow in the fully-cooling mode. The sliding-type door 3 illustrated in the same drawing makes a sliding movement so as to open the first flow-through opening 16 and close the second flow-through opening 17, and is positioned relatively downward of the drive unit 6. The sliding-type door 3 is provided with a dig-in groove 24 on the surface thereof on the upstream side surface of the air flow and an upper side along an axial direction of the coupling shaft 8.

An action of the coupling shaft 8 of the third embodiment being accommodated into the dig-in groove 24 will be described now. Immediately before becoming the fully-cooling mode, the rotational drive units 7 rotate in association with the rotation of the drive unit 6, and the coupling shaft 8 moves gradually toward the sliding-type door 3. The sliding-type door 3 moves downward in association with the rotation of the drive unit. When the sliding-type door 3 becomes the fully-cooling mode, the dig-in groove reaches a predetermined position in the vertical direction, and the coupling shaft 8 is positioned at a deepest point in the dig-in groove 24. In this manner, the coupling shaft 8 is accommodated in the dig-in groove 24.

The air flow in the fully-cooling mode is the high in pressure and the high in wind velocity as well in a space where the direction of flow is changed as illustrated in Fig. 3 with thick arrows. However, since the coupling shaft 8 in the third embodiment is accommodated within the dig-in groove 24 provided in the sliding-type door 3, the coupling shaft 8 is not exposed to the space where the air flows, so that increases in air ventilation resistance and noise caused by the sliding door mechanism may be effectively restrained.

The sliding-type door mechanism according to the third embodiment is set so that the coupling shaft 8 is accommodated in the dig-in groove 24 formed on the upstream side surface of the sliding-type door 3 even in the fully-hot mode. The drawing illustrating the state of the fully-hot mode will be omitted.

The sliding-type door 3 makes a sliding movement so as to close the first flow-through opening 16 and open the second flow-through opening 17 in the fully-hot mode, and is positioned relatively upward of the drive unit 6. The sliding-type door 3 is provided with the dig-in groove 24 on the upstream side surface of the air flow and a lower side along the axial direction of the coupling shaft 8.

An action of the coupling shaft 8 of the third embodiment being accommodated into the dig-in groove 24 will be described now. Immediately before becoming the fully-hot mode, the rotational drive units 7 rotate in association with the rotation of the drive unit 6, and the coupling shaft 8 moves gradually toward the sliding-type door 3. The sliding-type door 3 moves upward in association with the rotation of the drive unit. When the sliding-type door 3 becomes the fully-hot mode, the dig-in groove reaches a predetermined position in the vertical direction, and the coupling shaft 8 is positioned at the deepest point in the dig-in groove 24. In this manner, the coupling shaft 8 is accommodated in the dig-in groove 24.

The air flow in the fully-hot mode is the high in pressure and the high in wind velocity as well in a space where the direction of flow is changed as illustrated in Fig. 4 with thick arrows. However, since the coupling shaft 8 in the third embodiment is accommodated within the dig-in groove 24 provided in the sliding-type door 3, the coupling shaft 8 is not exposed to the space where the air flows, so that increases in air ventilation resistance and noise caused by the sliding door mechanism may be effectively restrained.

Subsequently, as a second example of a sliding-type door mechanism according to the third embodiment, an example in the fully-cooling mode and/or fully-hot mode will be described with reference to Fig. 6.

Fig. 6 is an explanatory drawing of the sliding-type door mechanism according to the second example of the third embodiment of the invention, and is a perspective view of the sliding-type door mechanism for explaining a case where the coupling shaft 8 enters the dig-in groove 24 of the sliding-type door. Fig. 6 illustrates an upper portion of the door mechanism from the upstream side of the air flow.

As illustrated in the same drawing, on the upper side of the upstream side surface of the sliding-type door 3, the dig-in groove 24 having a substantially semi-elliptical shape is formed. Although not illustrated in the drawing, another dig-in groove 24 is also formed on the lower side of the upstream side surface of the sliding-type door 3. The drive gear 5 installed on the side surface of the rotational drive unit 7 has a diameter slightly smaller than the diameter of the rotational drive unit 7.

The coupling shaft 8 is joined with the rotational drive units 7 at deviated positions (eccentric positions) from the centers of rotation 26 of the rotational drive units 7 at the position of the outer periphery on the outside of the diameter of the drive gear 5. In the fully-cooling mode, the coupling shaft 8 takes a position entering in the interior of the dig-in groove 24 formed on the upper surface of the sliding-type door 3 (accommodated in the dig-in groove 24). In the fully-hot mode, the coupling shaft 8 takes a position entering in the interior of the dig-in groove 24 formed on the lower surface of the sliding-type door 3 (accommodated in the dig-in groove 24). In this manner, since the diameter of the rotational drive units 7 is larger than the drive gear 5 and hence the coupling shaft 8 can be accommodated in the dig-in groove 24 on the sliding-type door 3 at a deeper position by joining the coupling shaft 8 to the rotational drive units 7 at the outer peripheral position outside the drive gear 5, increases in air ventilation resistance and noise caused by the sliding door mechanism may be effectively restrained.

Setting the coupling shaft 8 to take a position of entering (being accommodated) in the dig-in groove 24 on the sliding-type door 3 in the fully-cooling mode and the fully-hot mode is achieved by inspecting and setting gear pitches of the drive gear 5 and the driven gears 9 and the distance of movement of the sliding-type door 3 adequately.

### Fourth Embodiment

A vehicle air-conditioning apparatus provided with a sliding-type door mechanism according to a fourth embodiment of the invention will be described. The coupling shaft 8 according to the embodiment is joined to the rotational drive units 7 at the eccentric positions 27 on the rotational drive units 7. In addition, the coupling shaft 8 is set at a position farthest from the sliding-type door 3 in the fully-cooling mode and/or fully-hot mode.

Fig. 7 is a schematic cross-sectional view of the vehicle air-conditioning apparatus provided with the sliding-type door mechanism according to the fourth embodiment of the invention, and a schematic cross-sectional view illustrating an arrangement of a sliding-type door and a coupling shaft in the fully-cooling mode. The sliding-type door 3 illustrated in the same drawing makes a sliding movement so as to open the first flow-through opening 16 and close the second flow-through opening 17, and is positioned relatively downward of the drive unit 6. The coupling shaft 8 is at a position farthest from the sliding-type door 3.

The air flow in the fully-cooling mode is the high in pressure and the high in wind velocity as well in a space where the direction of flow is changed as illustrated in Fig. 3 with thick arrows. However, the coupling shaft 8 of this embodiment is at a position deviated from the centers of the rotational drive units 7 and farthest from the sliding-type door 3. In this manner, since the coupling shaft 8 is not located in the space in which the pressure or the wind velocity of the air is increased, an increase in air ventilation resistance or an increase in noise caused by the sliding-type door mechanism may be restrained effectively.

Fig. 8 is a schematic cross-sectional view of the vehicle air-conditioning apparatus provided with the sliding-type door mechanism according to the fourth embodiment of the invention, and a schematic cross-sectional view illustrating an arrangement of the sliding-type door and the coupling shaft in the fully-hot mode. The sliding-type door 3 illustrated in the same drawing makes a sliding movement so as to close the first flow-through opening 16 and open the second flow-through opening 17, and is positioned relatively upward of the drive unit 6. The coupling shaft 8 is at a position farthest from the sliding-type door 3.

The air flow in the fully-hot mode is the high in pressure and the high in wind velocity as well in a space where the direction of flow is changed as illustrated in Fig. 4 with thick arrows. However, the coupling shaft 8 of this embodiment is at a position deviated from the centers of the rotational drive units 7 and farthest from the sliding-type door 3. In this manner, since the coupling shaft 8 is not located in the space in which the pressure or the wind velocity of the air is increased, an increase in air ventilation resistance or an increase in noise caused by the sliding-type door mechanism may be restrained effectively.

### Fifth Embodiment

A vehicle air-conditioning apparatus provided with a sliding-type door mechanism according to a fifth embodiment of the invention will be described. The coupling shaft 8 according to the embodiment is joined to the rotational drive units 7 at the eccentric positions 27 on the rotational drive units 7. In addition, the coupling shaft 8 is set at a position of the rotational drive units 7 where the wind velocity is lowest in the fully-cooling mode and/or fully-hot mode. An explanatory drawing is omitted.

The vehicle air-conditioning apparatus is required to be reduced in size as described above, and a plurality of air flow channels are formed inside of a small case, and functional equipment such as the cooling heat exchanger and the heating heat exchanger, and the mechanisms such as the sliding-type door of the invention are arranged therein. In general, the flow velocity and the air pressure of the air flow channel vary significantly depending on the structure of the air flow channel, the size, structure, shape, place of installation of the various functional equipment, or a general shape of the sliding-type door. Therefore, the position where the flow velocity of air and the air pressure become minimum in the fully-cooling mode and/or the fully-hot mode may not be a position farthest from the sliding-type door as has been described in the fourth embodiment.

The flow velocity in the case of the vehicle air-conditioning apparatus may be estimated by an air flow analysis simulation. The position of the coupling shaft may be set by confirming the position where the flow velocity and the air pressure become minimum in the fully-cooling mode and/or the fully-hot mode by the air flow analysis simulation. For example, when the position where the flow velocity and the air pressure become minimum in the fully-cooling mode and/or the fully-hot mode is the position deviated from the position farthest from the sliding-type door, the drive gear and the driven gear may be set so that the coupling shaft is arranged at that deviated position.

### Sixth Embodiment

A vehicle air-conditioning apparatus provided with a sliding-type door mechanism according to a sixth embodiment of the invention will be described. The drive unit 6 according to the sixth embodiment includes two coupling shafts 8 and 8 joined to the rotational drive units 7 at the eccentric positions 27. The two coupling shafts 8 and 8 are set so that one of the coupling shafts takes a position most proximity to the sliding-type door 3 and the other coupling shaft takes a position farthest from the sliding-type door 3 or a position where the wind velocity is the lowest in the fully-cooling mode and/or the fully-hot mode. A drawing is omitted.

In a configuration in which the coupling shaft 8 is coupled to the rotational drive unit 7 at a position deviated from the center of rotation thereof, an additional moment force is required for transmitting a rotational force to the coupling shaft 8 when the rotational force is applied to one of the rotating shafts 10 from the outside of the drive unit 6 in comparison with a configuration in which the coupling shaft 8 is positioned at the rotational center. A torsion stress in a direction opposite to the direction of rotation is also generated. In the sliding-type door mechanism of the sixth embodiment of the invention, the drive unit 6 includes the two coupling shafts 8 and 8, and the respective coupling shafts 8 and 8 are joined to the rotational drive units 7 at positions substantially symmetrically deviated from the centers of rotation of the rotational drive unit 7. Therefore, the two coupling shafts 8 and 8 are increased in bearing force against the additional moment force and are capable of transmitting the applied rotational force efficiently.

The two coupling shafts 8 and 8 are set so that one of the coupling shafts takes a position most proximity to the sliding-type door 3 and the other coupling shaft takes a position farthest from the sliding-type door 3 in the fully-cooling mode and/or the fully-hot mode. Therefore, since both of the two coupling shafts are not located in the space in which the pressure or the wind velocity of the air is increased as described in the second embodiment and the fourth embodiment described above, an increase in air ventilation resistance or an increase in noise caused by the sliding-type door mechanism may be restrained effectively.

The coupling shafts set so as to take positions most proximity to the sliding-type door in the fully-cooling mode and/or the fully-hot mode may be set to positions entering the dig-in grooves on the sliding-type door, as described in the third embodiment.

In the same manner, the coupling shafts set so as to take positions farthest from the sliding-type door in the fully-cooling mode and/or the fully-hot mode may be set to positions where the flow velocity of the air flow and the air pressure derived by the air flow analysis simulation becomes the minimum as described in the fifth embodiment. Both of the coupling shafts 8 are not located in the space in which the pressure or the wind velocity of the air is increased, an increase in air ventilation resistance or an increase in noise caused by the sliding-type door mechanism may be restrained effectively.

### Seventh Embodiment

A vehicle air-conditioning apparatus provided with a sliding-type door mechanism according to a seventh embodiment of the invention will be described. The driving unit 6 according to the seventh embodiment is joined to the rotational drive unit 7 at the eccentric positions 27 on the rotational drive unit 7. In addition, the coupling shaft 8 is set so as to be accommodated in the dig-in groove 24 formed on the upstream side surface of the sliding-type door 3.

Fig. 9 is a schematic cross-sectional view of a vehicle air-conditioning apparatus provided with a sliding-type door mechanism according to a first example of the seventh embodiment, and a schematic cross-sectional view illustrating an arrangement of a sliding-type door and a coupling shaft in the fully-cooling mode. The sliding-type door 3 illustrated in the same drawing makes a sliding movement so as to open the first flow-through opening 16 and close the second flow-through opening 17, and is positioned relatively downward of the drive unit 6.

As illustrated in the same drawing, the coupling shaft 8 is set to a state in which the longitudinal part of the substantially flat cross section extends along the air flow. The coupling shaft 8 is set so that the longitudinal direction of the substantially flat shape extends in the direction of the air flow in any of the case where the coupling shaft 8 is set at a position proximity to the sliding-type door 3, the case where the coupling shaft 8 is set at a position farthest from the sliding-type door 3, or the case where the coupling shaft 8 is set at a position where the wind velocity is the lowest.

Fig. 11 is a schematic cross-sectional view of a vehicle air-conditioning apparatus provided with a sliding-type door mechanism according to a second example of the seventh embodiment, and a schematic cross-sectional view illustrating an arrangement of a sliding-type door and a coupling shaft in the fully-cooling mode;

As illustrated in the same drawing, a configuration in which the coupling shaft 8 having a substantially flat shape in the fully-cooling mode enter (is accommodated in) the interior of the dig-in groove 24 formed on the surface on the upper side of the sliding-type door 3 is also applicable. In this case, the substantially flat shape of the coupling shaft 8 is similar to the shape of the dig-in groove 24 and has a structure in which the air ventilation resistance is minimized.

Therefore, since the coupling shaft 8 is not located in the space in which the pressure or the wind velocity of the air is increased and, in addition, has substantially a flat shape which is set so that the longitudinal direction thereof extends along the direction of the air flow, an increase in air ventilation resistance or an increase in noise caused by the sliding-type door mechanism may be remarkably restrained effectively.

Fig. 10 is a schematic cross-sectional view of the vehicle air-conditioning apparatus provided with the sliding-type door mechanism according to the first example of the seventh embodiment of the invention, and a schematic cross-sectional view illustrating an arrangement of the sliding-type door and the coupling shaft in the fully-hot mode. The sliding-type door 3 illustrated in the same drawing makes a sliding movement so as to close the first flow-through opening 16 and open the second flow-through opening 17, and is positioned relatively upward of the drive unit 6.

As illustrated in the same drawing, the coupling shaft 8 is set so that the longitudinal direction of the substantially flat cross section extends along the air flow. The coupling shaft 8 is set so that the longitudinal direction of the substantially flat shape extends along the air flow in any of the case where the coupling shaft 8 is set at a position proximity to the sliding-type door 3, the case where the coupling shaft 8 is set at a position farthest from the sliding-type door 3, or the case where the coupling shaft 8 is set at a position where the wind velocity is the lowest.

In addition, a configuration in which the coupling shaft 8 having a substantially flat shape in the fully-hot mode enters (is accommodated in) the interior of the dig-in groove 24 formed on the surface on the lower side of the sliding-type door 3 in the fully-hot mode is also applicable.

In the case where the two coupling shafts are set so that one of the coupling shafts takes a position most proximity to the sliding-type door and the other coupling shaft takes a position farthest from the sliding-type door or a position where the wind velocity is the lowest in the fully-cooling mode and/or the fully-hot mode as in the sixth embodiment, a configuration in which the cross-sectional shape of the coupling shaft 8 is formed into a substantially flat shape and is set so that the longitudinal direction thereof extends along the air flow is also applicable. In addition to the advantages described in the sixth embodiment, an increase in air ventilation resistance or an increase in noise caused by the sliding door mechanism may be significantly restrained effectively.

The sliding-type door of the vehicle air-conditioning apparatus provided with the sliding-type door mechanism according to the first to seventh embodiments of the invention has been described thus far. As the larger the ratio that the coupling shaft 8 occupies in the longitudinal direction of the drive unit 6 and the smaller the ratio that the rotating shaft 10 occupies, advantageous effects of the invention are easily obtained.

The descriptions given thus far about the embodiments all relate to the structure and the mode of the sliding-type door mechanism in the fully-cooling mode and the fully-hot mode. In other words, the descriptions are about the sliding-type door of the invention as a function to adjust the opening and closing of the two air channels, namely the air channel extending from the cold air channel through the warm air channel to the mixing chamber and an air channel extending from the cold air channel directly to the mixing chamber.

However, as illustrated in Fig. 1, a number of air flow dividing ports such as the blowing port for defrost 18, the blowing port for ventilation 19, and the foot blowing port 20 are present in the internal structure of the vehicle air-conditioning apparatus. The type of adjustment of the air flow of the vehicle air conditioner includes various types of adjustments such as a wind direction adjustment, an air amount adjustment, an outside and inside air adjustment, in addition to a temperature adjustment and a humidity adjustment. Therefore, in order to achieve these various air flow adjustment, there is a case where the opening and closing adjustment is required in bifurcated opening portions of all of the air channels including the respective blowing ports.

For example, in the adjustment in which the air flow adjusted in the mixing chamber 15 is divided into the blowing port for defrost 18 and the blowing port for ventilation 19 or is limited to one of those, an application of the sliding-type door 3, which is one of the embodiments of the invention is possible. In this case, the sliding-type door mechanism may be installed in an intersected manner so as to intersect the openings of the blowing port for defrost 18 and the blowing port for ventilation 19. It is needless to say that the respective structures and functions are the same as those in the first to the seventh embodiments described above.

In other words, the sliding-type door of the vehicle air-conditioning apparatus provided with the sliding-type door mechanism of the invention is not limited to the function to adjust the opening and closing of the two air channels, namely the air channel extending from the cold air channel through the warm air channel to the mixing chamber and the air channel extending from the cold air channel directly to the mixing chamber. The sliding-type door of the vehicle air-conditioning apparatus provided with the sliding-type door mechanism of the invention may be applied as the sliding-type door for adjusting the opening ratio of the respective air flow channels at a number of air flow dividing ports provided in the interior of the air conditioning apparatus, and any of these modes are included within the technical scope of the invention.

Furthermore, the shape of the sliding-type door of the vehicle air-conditioning apparatus provided with the sliding-type door of the embodiment of the invention has been illustrated in the drawing on the premise of a flat plate shape. However, the sliding-type door may be curved toward the coupling shaft, or away from the coupling shaft, and it is needless to say that the sliding-type door only needs to have a shape which can effectively close or open the plurality of air flow openings that divide the air flow into two directions. These are all included in a technical thought of the invention.

### Industrial applicability

As descried above, according to the invention of the present application, a vehicle air-conditioning apparatus which can prevent increases in air ventilation resistance and noise reliably is provided.

The present invention has an influence on all of the materials, components, metal molds, and also a manufacturing industry relating to the vehicle air conditioning apparatus, and provides not only the automobile industry, but also general consumers widely with significant benefits. Industrial applicability of the invention is quite high.

### Reference Sign List

- 1: vehicle air-conditioning apparatus
- 2: case
- 3: sliding-type door
- 5: drive gear
- 6: drive unit
- 7: rotational drive unit
- 8: coupling shaft
- 9: driven gear
- 10: rotating shaft
- 11: cooling heat exchanger
- 12: heating heat exchanger
- 13: cold air channel
- 14: warm air channel
- 15: mixing chamber
- 16: first flow-through opening
- 17: second flow-through opening
- 18: blowing port for defrost
- 19: blowing port for ventilation
- 20: foot blowing port
- 21: defrost door
- 22: ventilation door
- 23: foot door
- 24: dig-in groove
- 26: center of rotation
- 27: eccentric position

## Claims

1. A vehicle air conditioning apparatus (1) comprising:
a case (2) formed with a plurality of air channels in the interior thereof;
a plate-shaped sliding-type door (3) arranged so as to be slidable across the plurality of air channels in the case (2) and configured to adjust the plurality of air channels to be opened and closed;
a driven gear (9) provided on the sliding-type door (3) along a direction of movement of the sliding-type door and configured to move the sliding-type door in the direction of movement;
a plurality of rotational drive units (7) arranged across the direction of movement on an upstream side of the sliding-type door, at least one of the rotational drive units including a rotational drive gear configured to drive the sliding-type door (3) by engaging the driven gear (9); and **characterized in that** it comprises
a coupling shaft (8) configured to couple the plurality of rotational drive units at positions deviated from their centers of rotation.

2. The vehicle air-conditioning apparatus (1) according to Claim 1, wherein the coupling shaft (8) is set to be at a position most proximity to the sliding-type door when the sliding-type door (3) is at a position substantially closing one of the plurality of air channels.

3. The vehicle air-conditioning apparatus (1) according to Claim 1 or 2, wherein
the sliding-type door (3) includes a dig-in groove (24) on a surface on the coupling shaft side so as to extend along the length of the coupling shaft, and
the coupling shaft (8) is set to be at a position entering the dig-in groove (24) of the sliding-type door when the sliding-type door (3) is at a position substantially closing one of the plurality of air channels.

4. The vehicle air-conditioning apparatus (1) according to Claim 1, wherein
the coupling shaft (8) is set to be at a position farthest from the sliding-type door (3) when the sliding-type door (3) is at the position substantially closing one of the plurality of air channels.

5. The vehicle air-conditioning apparatus (1) according to Claim 1, wherein
the coupling shaft (8) is set to be at a position of the rotational drive unit (7) where the wind velocity is lowest when the sliding-type door (3) is at the position substantially closing one of the plurality of air channels.

6. The vehicle air-conditioning apparatus (1) according to one of Claims 1 to 3, wherein
two of the coupling shafts (8, 8) are provided, and
one of the coupling shafts is set so as to take a position most proximity to the sliding-type door, and the other coupling shaft is set so as to take a position farthest from the sliding-type door (3) / or a position at which the wind velocity is lowest when the sliding type door (3) is at the position substantially closing one of the plurality of air channels.

7. The vehicle air-conditioning apparatus (1) according to one of Claims 1 to 6, wherein
the coupling shaft (8) has a flat cross-sectional shape, and
the coupling shaft (8) is arranged so that the longitudinal direction of the flat shape extends along a direction of an air flow in the periphery of the coupling shaft when the sliding-type door (3) is at the position substantially closing one of the plurality of air channels.

8. The vehicle air-conditioning apparatus (1) according to one of Claims 1 to 7, comprising:
a heating heat exchanger (12) to be arranged on the downstream side of the sliding-type door (3), wherein
the plurality of air channels are a warm channel that passes through the heat exchanger (12) and a bypass channel that bypasses the heat exchanger (12).

## Patentansprüche

1. Fahrzeugklimaanlage (1), umfassend:
ein Gehäuse (2), das mit einer Vielzahl von Luftkanälen in dem Innenraum davon ausgebildet ist;
eine plattenförmige Schiebetür (3) die zum Schieben über die Vielzahl von Luftkanälen in dem Gehäuse (2) angeordnet ist und zum Einstellen der Vielzahl von Luftkanälen auf offen und geschlossen konfiguriert ist;
ein angetriebenes Zahnrad (9) das an der Schiebetür (3) entlang einer Bewegungsrichtung der Schiebetür bereitgestellt ist und zum Bewegen der Schiebetür in die Bewegungsrichtung konfiguriert ist;
eine Vielzahl von Drehantriebseinheiten (7), die in Bewegungsrichtung auf einer stromaufwärtigen Seite der Schiebetür angeordnet sind, wobei mindestens eine der Drehantriebseinheiten ein Drehantriebszahnrad aufweist, das zum Antreiben der Schiebetür (3) durch Ineingriffbringen des Antriebszahnrades (9) konfiguriert ist;
und **dadurch gekennzeichnet, dass** sie umfasst:
eine Kupplungswelle (8), die zum Koppeln der Vielzahl von Drehantriebseinheiten an Positionen konfiguriert ist, die von ihren Drehzentren abgewichen sind.

2. Fahrzeugklimaanlage (1) nach Anspruch 1, wobei die Kupplungswelle (8) an einer Position eingestellt ist, die der Schiebetür am nächsten ist, wenn die Schiebetür (3) an einer Position ist, die im Wesentlichen einen der Vielzahl von Luftkanälen verschließt.

3. Fahrzeugklimaanlage (1) nach Anspruch 1 oder 2, wobei die Schiebetür (3) eine Eingriffsnut (24) auf einer Oberfläche auf der Kupplungswellenseite aufweist, um sich entlang der Länge der Kupplungswelle zu erstrecken, und wobei die Kupplungswelle (8) an einer Position eingestellt ist, die in die Eingriffsnut (24) der Schiebetür eintritt, wenn die Schiebetür (3) an einer Position ist, die im Wesentlichen einen der Vielzahl von Luftkanälen schließt.

4. Fahrzeugklimaanlage (1) nach Anspruch 1, wobei die Kupplungswelle (8) an einer Position eingestellt ist, die am weitesten von der Schiebetür (3) ist, wenn die Schiebetür (3) an einer Position ist, die im Wesentlichen einen der Vielzahl von Luftkanälen verschließt.

5. Fahrzeugklimaanlage (1) nach Anspruch 1, wobei die Kupplungswelle (8) an einer Position der Drehantriebseinheit (7) eingestellt ist, bei der die Blasluftgeschwindigkeit am geringsten ist, wenn die Schiebetür (3) an einer Position ist, die im Wesentlichen einen der Luftkanäle verschließt.

6. Fahrzeugklimaanlage (1) nach einem der Ansprüche 1 bis 3, wobei zwei der Kupplungswellen (8, 8) bereitgestellt sind, und eine der Kupplungswellen derart eingestellt ist, dass sie eine Position einnimmt, die der Schiebetür am nächsten ist, und wobei die andere Kupplungswelle eingestellt ist, um eine Position einzunehmen, die am weitesten von der Schiebetür (3) oder einer Position entfernt ist, bei der die Luftblasgeschwindigkeit am niedrigsten ist, wenn die Schiebetür (3) in der Position ist, die im Wesentlichen einen der Vielzahl von Luftkanälen verschließt.

7. Fahrzeugklimaanlage (1) nach einem der Ansprüche 1 bis 6, wobei die Kupplungswelle (8) eine flache Querschnittsform aufweist, und die Kupplungswelle (8) derart angeordnet ist, dass sich die Längsrichtung der flachen Form entlang einer Richtung eines Luftstroms im Randbereich der Kupplungswelle erstreckt, wenn die Schiebetür (3) in einer Position ist, die im Wesentlichen einen der Vielzahl von Luftkanälen verschließt.

8. Fahrzeugklimaanlage (1) nach einem der Ansprüche 1 bis 7, umfassend:
einen Wärmetauscher (12), der auf der stromabwärtigen Seite der Schiebetür (3) anzuordnen ist, wobei die Vielzahl von Luftkanälen ein ein Warmluftkanal, der den Wärmetauscher (12) durchläuft, und ein Umgehungskanal, der den Wärmetauscher (12) umgeht, ist.

## Revendications

1. Appareil de climatisation de véhicule (1), comprenant:
une enceinte (2) comportant une pluralité de canaux d'air à l'intérieur de celle-ci;
une porte de type coulissant en forme de plaque (3) agencée de manière à pouvoir coulisser à travers la pluralité de canaux d'air dans l'enceinte (2) et configurée de manière à régler la pluralité de canaux d'air à ouvrir et fermer;
un engrenage mené (9) prévu sur la porte de type coulissant (3) le long d'une direction de déplacement de la porte de type coulissant et configuré de manière à déplacer la porte de type coulissant dans la direction de déplacement;
une pluralité d'unités d'entraînement rotatives (7) agencées en travers de la direction de déplacement sur un côté amont de la porte de type coulissant, au moins une des d'unités d'entraînement rotatives comprenant un engrenage d'entraînement rotatif configuré de manière à entraîner la porte de type coulissant (3) en engageant l'engrenage mené (9), et
**caractérisé en ce qu'**il comprend:
un arbre de couplage (8) configuré de manière à coupler la pluralité d'unités d'entraînement rotatives à des positions déviées de leurs centres de rotation.

2. Appareil de climatisation de véhicule (1) selon la revendication 1, dans lequel l'arbre de couplage (8) est conçu pour se trouver à une position la plus proche de la porte de type coulissant lorsque la porte de type coulissant (3) se trouve dans une position qui ferme sensiblement un parmi la pluralité de canaux d'air.

3. Appareil de climatisation de véhicule (1) selon la revendication 1 ou 2, dans lequel:
la porte de type coulissant (3) comprend une rainure creusée (24) sur une surface du côté arbre de de couplage de manière à s'étendre le long de la longueur de l'arbre de couplage, et
l'arbre de couplage (8) est conçu pour se trouver à une position entrant dans la rainure creusée (24) de la porte de type coulissant lorsque la porte de type coulissant (3) se trouve dans une position qui ferme sensiblement un parmi la pluralité de canaux d'air.

4. Appareil de climatisation de véhicule (1) selon la revendication 1, dans lequel l'arbre de couplage (8) est conçu pour se trouver à une position la plus éloignée de la porte de type coulissant (3) lorsque la porte de type coulissant (3) se trouve dans la position qui ferme sensiblement un parmi la pluralité de canaux d'air.

5. Appareil de climatisation de véhicule (1) selon la revendication 1, dans lequel l'arbre de couplage (8) est conçu pour se trouver à une position de l'unité d'entraînement rotative (7) dans laquelle la vitesse du vent est la plus basse lorsque la porte de type coulissant (3) se trouve dans la position qui ferme sensiblement un parmi la pluralité de canaux d'air.

6. Appareil de climatisation de véhicule (1) selon l'une quelconque des revendications 1 à 3, dans lequel:
deux des arbres de couplage (8, 8) sont prévus, et
un premier des arbres de couplage est prévu de manière à adopter une position la plus proche de la porte de type coulissant, et l'autre arbre de couplage est prévu de manière à adopter une position la plus éloignée de la porte de type coulissant (3) ou une position dans laquelle la vitesse du vent est la plus basse lorsque la porte de type coulissant (3) se trouve dans la position qui ferme sensiblement un parmi la pluralité de canaux d'air.

7. Appareil de climatisation de véhicule (1) selon l'une quelconque des revendications 1 à 6, dans lequel:
l'arbre de couplage (8) présente une forme de section transversale plate; et
l'arbre de couplage (8) est agencé de telle sorte que la direction longitudinale de la forme plate s'étende le long d'une direction d'un écoulement d'air dans la périphérie de l'arbre de couplage lorsque la porte de type coulissant (3) se trouve dans la position qui ferme sensiblement un parmi la pluralité de canaux d'air.

8. Appareil de climatisation de véhicule (1) selon l'une quelconque des revendications 1 à 7, comprenant:
un échangeur de chaleur de chauffage (12) à agencer sur le côté aval de la porte de type coulissant (3),
dans lequel:
la pluralité de canaux d'air sont un canal chaud qui passe à travers l'échangeur de chaleur (21), et un canal de contournement qui contourne l'échangeur de chaleur (12).
